# EUROPEAN PATENT SPECIFICATION

(11) **EP 0 512 628 B1**
(45) Date of publication and mention of the grant of the patent: **29.01.1997**
(21) Application number: 92201223.2
(22) Date of filing: 04.05.1992
(51) Int. Cl.: G11B 23/087, G11B 15/087, G11B 15/07

(54) **System for magnetically recording/reproducing signals**
System zur magnetischen Aufnahme/Wiedergabe von Signalen
Système d'enregistrement/de lecture magnétique de signaux

(30) Priority: 06.05.1991 EP 91201068
(43) Date of publication of application: 11.11.1992
(73) Proprietor: Philips Electronics N.V., 5621 BA Eindhoven (NL); Polygram International Holding B.V., 3743 DN Baarn (NL)
(72) Inventor: Van Dijk, Cornelis, NL-5656 AA Eindhoven (NL); Vollmann, Norbert Christian, NL-5656 AA Eindhoven (NL)
(74) Representative: Cuppens, Hubertus Martinus Maria

(56) References cited:
- EP-A- 0 381 266
- DE-A- 2 901 575
- GB-A- 2 111 945
- US-A- 4 496 999
- PATENT ABSTRACTS OF JAPAN vol. 11, no. 058 (P-550)21 February 1987 & JP-A-61 222 081
- BRITISH KINEMATOGRAPHY SOUND AND TELEVISION SOCIETY JOURNAL vol. 68, no. 3, March 1986, LONDON GB pages 128 - 131 RAY TAYLOR 'RECORDING AND REPLAYING TIMECODE'

## Description

The invention relates to a system for magnetically recording/reproducing signals on/from magnetic tape in accordance with a standard, which system comprises apparatuses and cassettes compatible therewith, which apparatuses each comprise means for recording/reproducing signals on/from any of said cassettes, which cassettes comprise two parallel main walls and interconnecting transverse walls and occur with prerecorded tape, referred to as prerecorded cassettes, and with blank tape, referred to as blank cassettes, the blank cassettes having a tape length marking which can be detected by the apparatuses and which marks the length of the magnetic tape in a blank cassette by a pattern of openings in a marking zone of a main wall of the blank cassette, which tape length marking comprises a plurality of submarkings in a multi-bit code, the value of each bit being defined by the presence/absence of an opening.

Both with standard video and standard audio recording/reproducing systems it is customary that, in addition to blank cassettes, which can be provided with a recording by the consumer himself, prerecorded cassettes are offered to the user. Much sold prerecorded magnetic tape cassettes are, for example, the well-known Compact Cassettes provided with music or the well-known VHS video cassettes provided with a movie on tape.

In the present context a "standard" is to be understood to mean: a document which is utilised by one or more manufacturers and which specifies the electrical, format, mechanical and magnetic parameters of a system of compatible apparatuses and media for recording and/or reproducing signals on/from magnetic tape.

In a known prior art standard system it is known (US-PS 4,339,776) to provide standard video cassettes for recording/reproducing video signals with a pattern of three openings, which may or may not be covered by a wall portion, to encode the playing time of a cassette. The apparatuses belonging to the system comprise sensor pins which cooperate with the openings to detect the pattern of openings and to transfer the information to a microprocessor of the apparatus. On the basis of this information the apparatus is capable of detecting whether a preprogrammed video recording will exceed or will be within the available playing time of the cassette. This known system has all the features in the preamble of claim 1.

In the present description "opening" is to be understood to mean a cavity of a specific minimum depth, which cavity may have or may not have a bottom or a cover.

Prerecorded cassettes are not primarily intended for making home recordings. Therefore, in the case of said known prerecorded video cassettes the presence of code openings is less practical. Likewise, it is less practical to provide a prerecorded cassette with a length of tape corresponding to a standard playing time. This would mean that the prerecorded cassette would always contain a length of unused blank tape, which is a waste of tape. The prerecorded program will only exceptionally occupy exactly a standard length of tape.

In principle, the presence of a tape-length marking on the cassette could be used even in the case of a prerecorded cassette. By means of suitable electronic provisions in the apparatus it would be possible to indicate the elapsed and residual playing time on a display panel. However, the last-mentioned parameter would not be accurate owing to the presence of the above-mentioned length of blank tape in the cassette.

The provision of the required code on a cassette involves an additional production step for a manufacturer and therefore has a cost-raising effect. The presence of openings in a cassette may increase the likelihood of ingress of dust and other contaminants. The presence of the marking zone prohibits an alternative use of the relevant zone of the cassette.

It is one of the objects of the invention to provide a system comprising a prerecorded cassette which does not have the above disadvantages and which, moreover, has the advantage of an aesthetically more pleasing appearance. To this end the system in accordance with the invention is characterised in that on the prerecorded cassettes a tape length marking is absent, and information about the playing time and information about the position are recorded on the tape in the form of a time code.

The invention has the advantage that it provides a more elegant system in which the prerecorded cassette differs from the blank cassette and can be adapted to its specific nature. During use of the cassette the information may be read in code from the tape, making it possible for an apparatus with the appropriate intelligence in the form of a microprocessor, suitable software and a suitable display unit to inform the user about the elapsed and the residual playing time. The absence of the code openings on the cassette mitigates unnecessary soiling of the prerecorded cassette. The tape accommodated in the cassette need not be longer than strictly necessary. If desired, the thickness of the tape may deviate from that prescribed by a standard for blank cassettes. Prescribing a tape thickness for blank cassettes is useful in order to guarantee an unambiguous relationship between playing time and tape length. Such an unambiguous relationship is necessary for the apparatus to enable an effective use to be made of techniques, known *per se,* for determining the residual playing time in the case of a partly utilised tape by means of tachogenerators coupled to the winding spindles of an apparatus. (US-PS 4,172,231 - Re 30,939 - US-PS 4,366,371 - US-PS 4,398,300 - US-PS 4,408,335 - US-PS 4,411,008 and US-PS 4,357,643).

The Applicant has already made proposals to provide a prerecorded magnetic tape with a time code containing information about the position on the tape and about the playing time. The information is used for realising various desired functions. (Dutch Patent Applications 90- 02319, 90-1109, 91-00198 and 91-00475. The present invention is based on the recognition of the fact that, surprisingly, such a time code for cassettes of a standard system which specifies a tape-length marking on the cassette in the form of a pattern of openings in a marking zone and which comprises prerecorded cassettes in addition to blank cassettes can be employed advantageously in combination with the absence of a tape-length marking on the prerecorded cassettes only.

The known prior-art standard system mentioned earlier also specifies an erase-protection opening in a wall of the cassette, which opening can be closed by a blocking member. The blocking member can be set to three different positions. In one of the three positions an opening in a wall of the cassette is closed and in another position the opening is opened to block the possibility of recording signals on the tape or to enable such recording. In the third position the manufacturer sets the blocking member in such a way that it can be moved to one of the first two positions only after disassembly of the cassette. The third position neither allows the recording of signals on a standard apparatus. Cassettes whose blocking member has been set to the third position are used for the manufacture of prerecorded cassettes on special non-standard machines which ignore the erase protection.

An advantageous embodiment of the system according to the invention, is characterised in that the blank cassettes have an erase-protection opening in a wall, which opening can be closed by a blocking member, and in that on the prerecorded cassettes an erase protection opening is absent, so that the recording on the tape is normally unerasable and the prerecorded cassette is not suitable for making a recording on the apparatuses belonging to the system.

The advantage of this embodiment of the invention is that it does not have any redundant provisions to prevent recordings being made on the prerecorded cassette. The absence of redundant openings in walls of the cassette results in improved protection of the cassette interior against the ingress of dust and dirt and also contributes to a pleasing appearance of the cassette.

A further embodiment of the invention is characterized in that the prerecorded cassette has a preprinted label relating to the recording on the tape.

The Applicant has already proposed to provide a prerecorded cassette with a preprinted label relating to the recording present on the tape (EP 90203297.8). Within the scope of the present invention the use of a preprinted label is particularly advantageous because the relationship between the information provided on the label and the recording on the tape remains intact indefinitely, since a user cannot make another recording on the tape. Thus, for the first time the presence of a preprinted label on a prerecorded magnetic-tape cassette never leads to confusion. Until the invention, magnetic-tape cassettes have been regarded as the appropriate medium for the home-recording of programmes. Disc records, such as gramophone discs and optical discs, had been regarded as the only media eminently suitable for permanent recordings. The invention leads to a radical departure from this viewpoint and for the first time provides a magnetic-tape cassette as a medium for permanent recordings. For the first time complete justice is done to the fact that the magnetic tape cassette is a highly convenient and easy to handle medium for both permanent recordings and home-made recordings.

EP 0 381 266 discloses a magnetic tape recording system comprising an apparatus and a blank cassette without tape length marking on the blank cassette. The apparatus comprises a magnetic head with an auxiliary gap enabling to record or read the residual time available on the tape and the elapsed time of the tape.

US 4,496,999 discloses a magnetic tape cassette with an antirecording opening formed in the housing to prevent overrecording. Contrary to the teachings of the present application, an opening is present to prevent recording.

DE-OS 29 01 575 discloses a magnetic tape cassette in which an antirecording opening can be made accessible by breaking out a nose so that overrecording is prevented. Contrary to the teachings of the present application overrecording is prevented when the opening is accessible. A label has been glued onto the cassette.

The invention will now be described in more detail, merely by way of illustration, with reference to the drawings, which relate to a possible embodiment to which the invention is not limited and in which:
Figure 1 is an underneath view of a main wall of a prerecorded cassette belonging to a system for recording/reproducing digital audio signals,
Figure 2 is a plan view of the cassette shown in Fig. 1,
Figure 3 is a view taken on the arrow III in Fig. 1 and showing the cassette of Figs. 1 and 2,
Figure 4 is a perspective view of the rear of the cassette shown in Figs. 1-3,
Figure 5 is a view similar to that shown in Fig. 1 but now showing the rear of a blank cassette belonging to the system,
Figure 6 is a plan view of the cassette shown in Fig. 5,
Figure 7 is view taken on the arrow VII in Fig. 5 and showing the cassette of Figs. 5 and 6, and
Figure 8 is a perspective view of the rear of the cassette shown in Figs. 5-7.

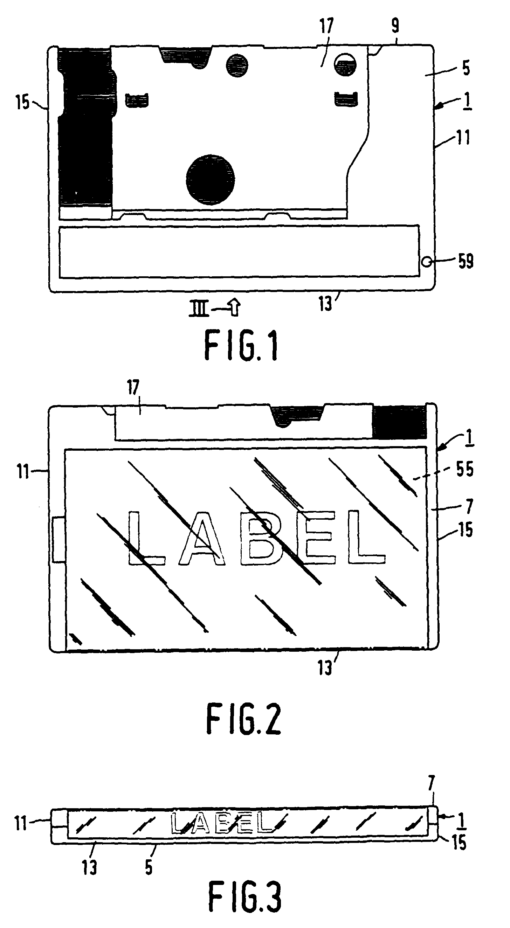

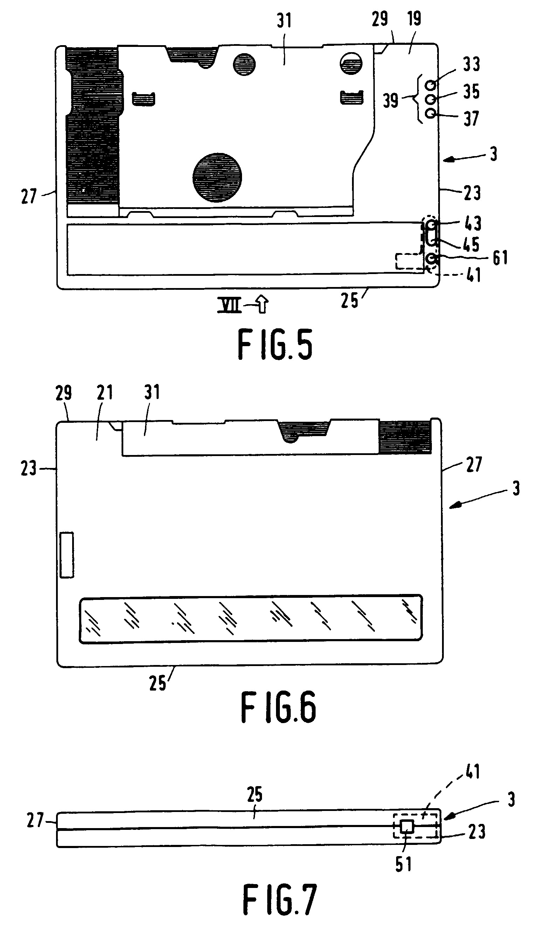

Figures 1-4 show a prerecorded cassette 1 for a system for magnetically recording/reproducing signals on/from a magnetic tape in accordance with a standard. The magnetic tape is accommodated in the cassette in a manner known *per se* and for simplicity it is not shown in the drawings. The cassette belongs to the so-called "Digital Compact Cassette" (dcc) system which in the meantime has been announced publicly and which comprises apparatuses and cassettes compatible therewith, which cassettes have two parallel main walls and interconnecting transverse walls and occur with prerecorded tape (prerecorded cassettes 1) and with blank tape (blank cassettes 3, see Figs. 5-8).

For further information about the above-mentioned cassette and the dcc system in general reference is made, for example, to the Applicant's prior Patent Application EP 434 134 A1.

The prerecorded cassette 1 has main walls 5 and 7 and transverse walls 9-15. It has a sliding cover 17 for opening and closing a number of openings in the walls of the cassette. The blank cassette 3 has main walls 19 and 21, transverse walls 23, 25, 27 and 29, and a sliding cover 31.

Exclusively for the blank cassette 3 the standard specifies a tape-length marking which can be detected by an apparatus (not shown) and which marks the length of the magnetic tape in the cassette by means of a pattern of openings 33, 35, 37 in a marking zone 39 of the main wall 19. The tape length marking for the cassette 3 comprises three submarkings in a multi-bit code, the value of each bit being defined by the presence/absence of an opening 33, 35, 37.

In the embodiment shown the three openings are all open by way of illustration. However, it will be evident from the above that the number of openings which are actually open depends on the length of the tape in the cassette. In practice it will be advantageous to provide the main wall 19 of the blank cassettes with a pattern of three break-out wall portions in the marking zone 39. In production this enables the relevant cassette part to be manufactured only in a single version. Subsequently, the marking pattern can then be adapted to the length of magnetic tape to be loaded into the cassette by breaking out one or more of the wall portions.

In accordance with the invention the prerecorded cassette 1 has no openings at all in the marking zone. However, as already explained, the information about playing time as well as position is recorded on the tape in the form of a time code.

The prerecorded cassette 1 belongs to the afore-mentioned dcc system and hence to a standard which defines an erase protection opening in a wall of a cassette, which opening can be closed by a blocking member. In Fig. 5 this blocking member -which, according to the dcc-standard, is present only on blanc cassettes- is shown diagrammatically on blanc cassette 3 as a broken line and bears the reference numeral 41. A user can move the blocking member by means of a pin 43. The pin is movable in an elongate opening 45.

The blank cassette 3 has two erase protection openings, *i.e.* the opening 51 in the rear wall and the opening 45 in the main wall 19. The last-mentioned opening is formed by a part of the elongate opening 45, namely the lower part (Fig. 5). By moving the pin 43 downward (Fig. 5) the opening 51 and at the same time the lower part of the opening 45 are closed and the erase protection is active.

In accordance with the invention the prerecorded cassette 1 does not have any erase protection openings at all so that erase protection is active always. Therefore normally the recording on the tape cannot be erased by an apparatus belonging to the system. It would be very difficult to provide openings corresponding to openings 51 and 53 at home, since this would require drilling into the cassette at exactly the correct positions. Moreover, a drilling operation will most likely ruin the cassette and render it unsuitable for further use.

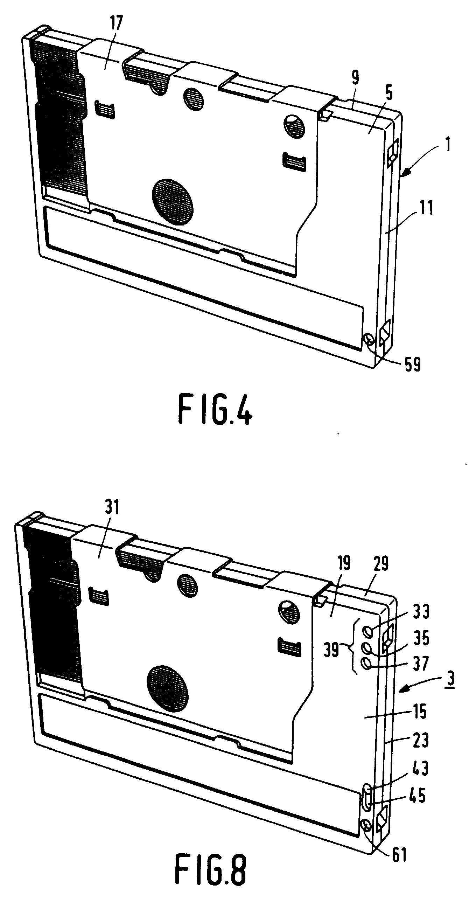

The openings 59 and 61 present on the prerecorded cassette 1 and the blank cassette 3 respectively (Figures 4 and 8) distinguish the cassettes from the well known analog Compact Cassettes in a machine readable form. The prerecorded cassette 1 has a permanent preprinted label 55 carrying information relating to the normally unerasable recording on the tape. The label is situated underneath a transparent window 57, which is fixedly connected to the remainder of the cassette, for example by ultrasonic welding.

It is to be noted that although the invention has been described with reference to the drawings the invention is by no means limited to the embodiments shown in the drawings. The invention also extends to all the embodiments which deviate from those shown in the drawings but within the scope defined by the Claims and which utilise the basic idea of the invention, which is that in a system in accordance with a standard specifying a tape length marking on cassettes and comprising both prerecorded and blank cassettes the tape length markings such as code openings are dispensed with deliberately in the prerecorded cassettes. Preferably, an erase protection opening is also dispensed within the prerecorded cassettes.

For example, in contrast with what is shown in the drawings, it is possible to provide the cassette with a marking zone at another location and to use another number of openings. Moreover, the erase protection may be different. The invention cannot be used for audio cassettes only but may also be applied to other systems, such as for example systems for recording/reproducing video signals or computer programs.

Further advantages of the invention not mentioned herein may be obtained depending on the embodiment used and the field of use. Moreover, further advantages may become apparent by comparison of the invention with prior art other than cited.

For the sake of completeness it is to be noted that the code openings 59 and 61 of the prerecorded cassette 1 and the blank cassette 3 are not relevant to the present invention. They merely serve to allow the apparatus to distinguish the dcc cassettes from analog Compact Cassettes.

## Claims

1. A system for magnetically recording/reproducing signals on/from magnetic tape in accordance with a standard, which system comprises apparatuses and cassettes (1, 3) compatible therewith, which apparatuses each comprise means for recording/reproducing signals on/from any of said cassettes, which cassettes comprise two parallel main walls and interconnecting transverse walls and occur with prerecorded tape, referred to as prerecorded cassettes (1), and with blank tape, referred to as blank cassettes (3), which standard specifies for the blank cassettes a tape length marking (33, 35, 37) which can be detected by the apparatuses and which marks the length of the magnetic tape in a blank cassette by a pattern of openings (33, 35, 37) in a marking zone (39) of a main wall (19) of the blank cassette, which tape length marking comprises a plurality of submarkings in a multi-bit code, the value of each bit being defined by the presence/absence of an opening, characterised in that on the prerecorded cassettes (1) a tape length marking (33, 35, 37) is absent, and information about the playing time and information about the position are recorded on the tape in the form of a time code.

2. A system as claimed in Claim 1, characterised in that the blank cassettes (3) have an erase-protection opening (51) in a wall (25), which opening can be closed by a blocking member (41), and in that on the prerecorded cassettes (1) an erase protection opening is absent, so that the recording on the tape is normally unerasable and the prerecorded cassette is not suitable for making a recording on the apparatuses belonging to the system.

3. A system as claimed in Claim 2, characterized in that the prerecorded cassette (1) has a preprinted label (55) relating to the recording on the tape.

## Patentansprüche

1. System zur magnetischen Aufzeichnung/ Wiedergabe von Signalen auf/von einem Magnetband nach einer Norm, wobei dieses System Geräte und dazu kompatible Kassetten (1, 3) umfaßt, wobei diese Geräte je Mittel aufweisen zum Aufzeichnen/Wiedergeben von Signalen auf/von jeder der genannten Kassetten, wobei diese Kassetten zwei parallele Hauptwände und verbindende Querwände aufweisen und mit Band versehen sind, das vorher mit einer Aufnahme versehen ist, die als vorbespielte Kassetten (1) bezeichnet werden, oder mit unbespieltem Band, die dann als unbespielte Kassetten (3) bezeichnet werden, wobei die genannte Norm für die unbespielten Kassetten gilt, wobei eine Bandlängenmarkierung (33, 35, 37) vorgesehen ist, die von den Geräten detektiert werden kann und die Länge des Magnetbandes in einer unbespielten Kassette markiert, und zwar durch ein Muster von Öffnungen (33, 35, 37) in der Markierungszone (39) einer Hauptwand (19) der unbespielten Kassette, wobei diese Bandlängenmarkierung eine Anzahl Hilfsmarkierungen in einem Mehrbitcode enthält, wobei der Wert jedes Bits durch das Vorhandensein/Fehlen einer Öffnung definiert wird, dadurch gekennzeichnet, daß es auf den vorbespielten Kassetten (1) keine Bandlängenmarkierung (33, 35, 37) gibt, und daß Information in bezug auf Spieldauer und Position auf dem Band in Form eines Zeitcodes auf das Band aufgenommen sind.

2. System nach Anspruch 1, dadurch gekennzeichnet, daß die unbespielten Kassetten (3) eine Löschsperröffnung (51) in einer Wandung (25) aufweisen, die durch ein Sperrelement (41) geschlossen werden kann, und daß bei den vorbespielten Kassetten (1) eine Löschsperröffnung fehlt, so daß die Aufzeichung auf Band normalerweise nicht löschbar ist und die vorbespielte Kassette zum Herstellen einer Aufzeichung auf dem zu dem System gehörenden Gerät nicht geeignet ist.

3. System nach Anspruch 2, dadurch gekennzeichnet, daß die vorbespielte Kassette (1) einen vorgedruckten Aufkleber (55) enthält in bezug auf der Aufzeichnung auf dem Band.

## Revendications

1. Système pour enregistrer/reproduire magnétiquement des signaux dans/à partir d'une bande magnétique selon une norme, lequel système comprend des appareils et des cassettes compatibles (1, 3), lesquels appareils comprennent chacun des moyens pour enregistrer/reproduire des signaux dans/à partir de chacune desdites cassettes, lesquelles cassettes comprennent deux parois principales parallèles et des parois transversales de liaison et se présentent avec une bande préalablement munie d'un enregistrement, appelée cassette pré-enregistrée (1) et avec un bande vierge, appelée cassette vierge (3), laquelle norme spécifie pour les cassettes vierges un repérage de longueur de bande (33, 35, 37), qui peut être détecté par les appareils et qui repère la longueur de la bande magnétique dans une cassette vierge à l'aide d'une configuration d'ouvertures (33, 35, 37) dans une zone de repérage (39) d'une paroi principale (19) de la cassette vierge, lequel repérage de longueur de bande comprend une pluralité de repères partiels dans une code multi-bits, la valeur de chaque bit étant définie par la présence/absence d'une ouverture, caractérisé en ce qu'un repérage de longueur de bande (33, 35,37) est absent sur les cassettes pré-enregistrées (1) et l'information concernant la durée de reproduction et l'information concernant la position sont enregistrées dans la bande sous forme d'un code de temps.

2. Système selon la revendication (1), caractérisé en ce que les cassettes vierges (3) présentent une ouverture de verrouillage de l'effacement (51) dans une paroi (25), laquelle ouverture peut être fermée par un élément de blocage (41), et ce qu'une ouverture de verrouillage de l'effacement est absente sur les cassettes pré-enregistrées (1), de façon que l'enregistrement dans la cassette soit normalement ineffaçable et que la cassette pré-enregistrée ne soit pas appropriée à la réalisation d'un enregistrement avec les appareils appartenant au système.

3. Système selon la revendication 2, caractérisé en ce que la cassette préenregistrée (1) présente un label pré-imprimé (55) concernant l'enregistrement dans la bande.
